# EUROPÄISCHE PATENTSCHRIFT

(11) **EP 0 411 280 B1**
(45) Veröffentlichungstag und Bekanntmachung des Hinweises auf die Patenterteilung: **03.08.1994**
(21) Anmeldenummer: 90110768.0
(22) Anmeldetag: 07.06.1990
(51) Int. Cl.: B60J 7/12

(54) **Faltverdeck für Kraftfahrzeuge**
Folding top for motor vehicles
Capote pliante pour véhicules automobiles

(30) Priorität: 01.08.1989 DE 3925389
(43) Veröffentlichungstag der Anmeldung: 06.02.1991
(73) Patentinhaber: Bayerische Motoren Werke Aktiengesellschaft, 80788 München (DE)
(72) Erfinder: Ball, Wilfried, D-8312 Dingolfing (DE); Nagelschmitz, Wilhelm, D-8042 Oberschleissheim (DE); Weitbrecht, Winfried, D-8000 München 45 (DE); Marke, Dietrich, D-8083 Mammendorf (DE)

(56) Entgegenhaltungen:
- DE-A- 3 127 524
- DE-A- 3 133 932
- PATENT ABSTRACTS OF JAPAN vol. 8, no. 37 (M-277)(1474) 17. Februar 1984
- & JP-A-58 194 642 (ARAKAWA SHIYATAI KOGYO) 12. November 1983

## Beschreibung

Die Erfindung bezieht sich auf ein Faltverdeck für Kraftfahrzeuge, mit den im Oberbegriff des Patentanspruchs 1 angegebenen Merkmalen.

Ein derartiges Faltverdeck ist bereits aus der DE-A-31 27 524 bekannt. Das Verdeckgestänge des Faltverdecks weist einen vorderen und einen hinteren Querspriegel auf, die zur Versteifung des Verdeckgestänges und Verminderung von Windgeräuschen verbreitert und mit dem Verdeckstoff verbunden sind. Ein wesentlicher Nachteil ist, daß das Faltverdeck keine Möglichkeit bietet, um über dem Faltverdeck einen Träger beispielsweise für Gepäck oder Lasten anzuordnen. Um den Innenraum nicht einzuengen, sind Gegenstände im Gepäckraum mitzuführen, der bei einem Fahrzeug mit einem Aufnahmefach für das Faltverdeck eingeschränkt ist. Längere Gegenstände, wie Skier, können in dem Gepäckraum nicht mitgeführt werden.

Der Erfindung liegt die Aufgabe zugrunde, ein Faltverdeck für Kraftfahrzeuge nach dem Oberbegriff des Patentanspruchs 1 anzugeben, an dem ein Träger für Gepäck und/oder Lasten zu befestigen ist.

Diese Aufgabe ist durch die im Kennzeichen des Patentanspruchs 1 angegebenen Merkmale gelöst. Ein wesentlicher Vorteil ist darin zu sehen, daß lediglich Öffnungen im Verdeckstoff und Befestigungsmöglichkeiten an den Spriegeln vorzusehen sind, um an diesen einen über dem Faltverdeck angeordneten Träger befestigen zu können. Diese Maßnahmen erfordern lediglich einen geringen Aufwand. Bereits gefertigte Faltverdecke können nachträglich mit derartigen Öffnungen im Verdeckstoff und Befestigungsstellen an den Spriegeln nachgerüstet werden. Ein Problem besteht darin, daß übliche Verdecke eine geringe Steifigkeit aufweisen. Um eine für das Mitführen von Gepäck und/oder Lasten auf dem Faltverdeck erforderliche Steifigkeit aufzuweisen, kann das Verdeck entsprechend stabil gefertigt sein. Da andererseits der Träger mit einer entsprechenden Eigenstabilität gefertigt werden kann, die nach der Montage des Trägers die Gesamtstabilität des Faltverdecks erhöht, können übliche Faltverdecke mit einem an sich in der Stabilität zum Mitführen von Gepäck und/oder Lasten nicht ausreichend stabilen Verdeckgestänge mit einem derartigen Träger verbunden werden, wenn dieser die Gesamtstabilität des Faltverdecks entsprechend erhöht. Der Träger kann am Zielort abgenommen und beispielsweise zerlegt im Gepäckraum des Fahrzeugs aufbewahrt werden. Ist der Träger abgenommen und beispielsweise im Gepäckraum untergebracht, so ist ein Fahren mit geöffnetem Faltverdeck problemlos möglich.

Vorteilhafte Ausgestaltungen der Erfindung sind Gegenstand von Unteransprüchen.

Zwei Ausführungsbeispiele der Erfindung werden anhand einer Zeichnung näher erläutert. Es zeigen
- Fig. 1: ein erstes Ausführungsbeispiel mit einem im Dachbereich an einem vorderen und einem hinteren Spriegel befestigten Träger,
- Fig. 2: ein Querschnitt durch eine Befestigungsstelle des Trägers von Fig. 1 an dem vorderen Spriegel,
- Fig. 3: eine Fig. 2 entsprechende Ansicht durch eine Befestigungsstelle des Trägers an dem hinteren Spriegel und
- Fig. 4: ein zweites Ausführungsbeispiel mit einem im Dachbereich und an einem vorderen Windlaufelement der Windschutzscheibe befestigten und zusätzlich an einem hinteren Spannbügel abgestützten Träger.

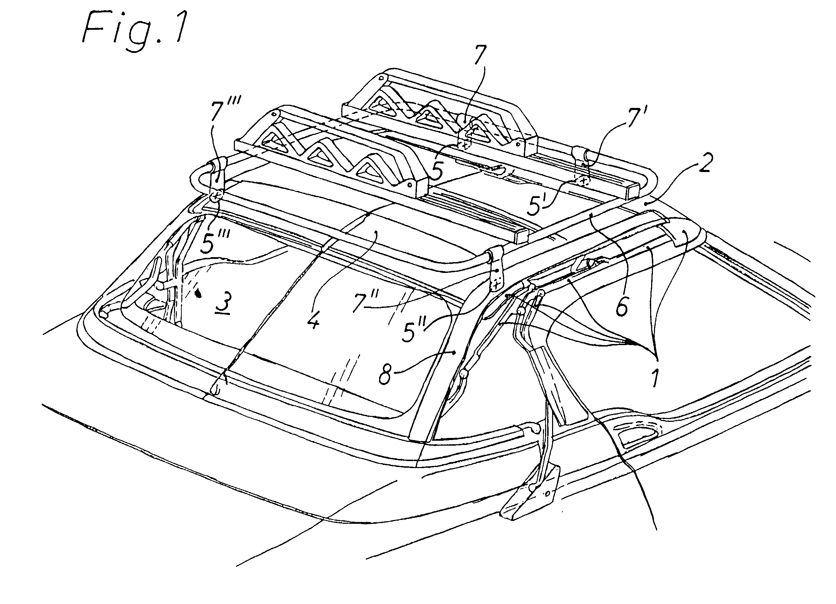

Das in Fig. 1 gemäß einem ersten Ausführungsbeispiel dargestellte Faltverdeck eines Kraftfahrzeugs ist zur vertikalen Fahrzeugmittelebene symmetrisch ausgebildet. Der Verdeckstoff des Faltverdecks ist von einem Verdeckgestänge 1 gestützt, das einen an sich bekannten Aufbau aufweisen kann. Das Verdeckgestänge 1 weist einen vorderen Querspriegel 2 auf, der in Schließstellung des Faltverdecks an einem oberhalb der vorderen Windschutzscheibe angeordneten Windlaufelement anliegt. Der Übergangsbereich zwischen dem Fahrzeugdach und dem oberen Randbereich einer mit einer Heckscheibe 3 versehenen Heckscheibenöffnung ist von einem querverlaufenden Hauptspriegel 4 des Verdeckstänges 1 gestützt. Im Bereich des Querspriegels 2 und des Hauptspriegels 4 sind bei dem Ausführungsbeispiel in dem Verdeckstoff jeweils zwei seitlich gegenüberliegende Öffnungen 5, 5′, 5˝, 5‴ ausgebildet, durch die ein über dem Faltverdeck angeordneter Träger 6 mit dem Querspriegel 2 und dem Hauptspriegel 4 verbindbar ist. Der lediglich durch einen 0-förmigen Rahmen und Tragarme 7, 7′, 7˝, 7‴ dargestellte Träger 6 kann einen an sich beliebigen Aufbau aufweisen. Die im wesentlichen aus den Steifigkeiten des Verdeckgestänges 1, des Trägers 6 und von an den inneren Seitenbereichen angeordneten Versteifungselementen 8 gebildete Gesamtsteifigkeit des Faltverdecks ist so bemessen, daß an dem Träger 6 auch größere Gepäckstücke und Lasten sicher abgestützt und mit dem Fahrzeug mitgeführt werden können.

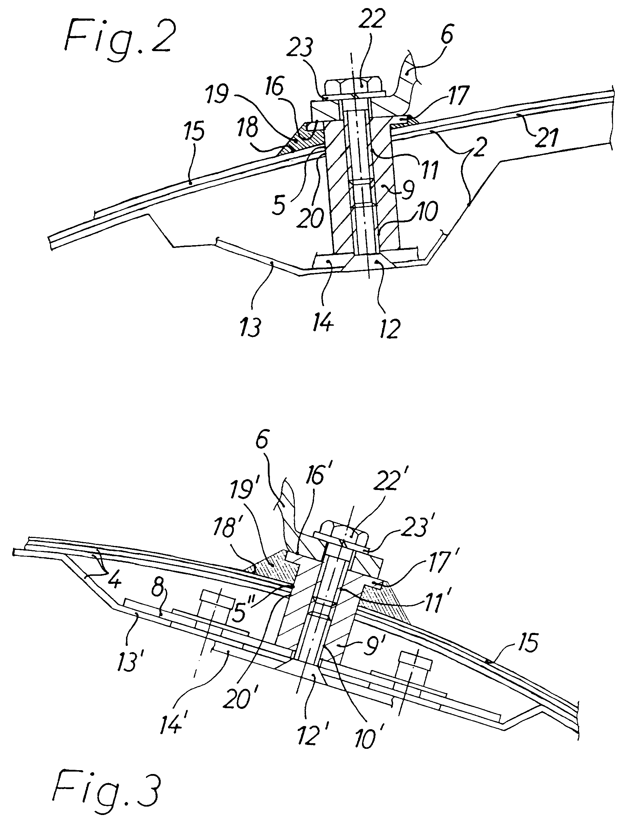

Wie aus Fig. 2 hervorgeht, ist der Träger 6 im Bereich des vorderen Querspriegels 2 über jeweils ein seitliches Befestigungselement 9 mit dem Querspriegel 2 verbunden. Das Befestigungselement 9 ist bei dem Ausführungsbeispiel eine Buchse mit einem ersten 10 und einem zweiten Befestigungsgewinde 11. Das Befestigungselement 9 ist über eine von innen in das erste Befestigungsgewinde 10 eingeschraubte Befestigungsschraube 12 mit dem Querträger 2 verbunden, wobei zwischen einem inneren Rahmenteil 13 und dem Befestigungselement 9 eine Verstärkungsplatte 14 zwischengelegt ist. Das buchsenförmige Befestigungselement 9 ist bei dem Ausführungsbeispiel ein durch die zugeordnete Öffnung 5 im Verdeckstoff 15 nach außen vorstehendes Stützteil, das eine Auflagefläche 16 für den Träger 6 bildet. Das Befestigungselement 9 weist an dem nach außen vorstehenden Bereich einen radial vorstehenden Kragen 17 auf. Zwischen dem Kragen 17 und einer Außenfläche 18 des Verdeckstoffes 15 ist ein Formteil 19 angeordnet, das an dem Befestigungselement 9 und an der Außenfläche 18 angeklebt ist. Bei dem Ausführungsbeispiel durchdringt das Befestigungselement 9 eine an den Umfang des Befestigungselements 9 angepaßte Ausnehmung 20 in einem oberen Rahmenteil 21 des Querspriegels 2, die mit der Öffnung 5 im Verdeckstoff 15 fluchtet. In das zweite Befestigungsgewinde 11 ist von außen eine Schraube 22 eingeschraubt, die den Träger 6 mit dem Befestigungselement 9 verbindet. Zur Verdrehsicherung der Schraube 22 ist eine Sicherungsscheibe 23 zwischengelegt. Bei dem Ausführungsbeispiel ist das erste 10 und zweite Befestigungsgewinde 11 hintereinander fluchtend so angeordnet, daß eine Durchgangsöffnung gebildet ist. In diesem Fall ist durch nicht dargestellte Dichtungsmittel bzw. durch einen von außen in das zweite Befestigungsgewinde 11 einschraubbaren Verschlußstopfen die Durchgangsöffnung verschlossen, wenn der Träger 6 nicht montiert ist. Das erste und das zweite Befestigungsgewinde können auch durch je ein mit einem Gewinde versehenes Sackloch gebildet sein. Ebenso ist es möglich, daß das erste Befestigungsgewinde und die Befestigungsschraube entfallen, wenn das Befestigungselement auf andere Weise mit dem betreffenden Spriegel verbunden ist. Auch das Befestigungselement kann entfallen, wenn der Träger unmittelbar an dem Spriegel zu befestigen ist.

In Fig. 3 ist eine seitliche Befestigungsstelle des Trägers 6 von Fig. 1 an dem Hauptspriegel 4 im Querschnitt dargestellt. Wie man durch vergleichende Betrachtung mit Fig. 2 erkennt, ist der Träger 6 bei dem Ausführungsbeispiel an dem Hauptspriegel 4 ähnlich befestigt, wie an dem vorderen Querspriegel 2. Die in Fig. 3 dargestellten und mit den Teilen in Fig. 2 vergleichbaren Teile sind mit gleichen Bezugszahlen oder mit gleichen Bezugszahlen und einem hochgestellten Zeichen versehen, so daß auf diese Teile nicht mehr einzugehen ist. Im Unterschied zu Fig. 2 ist in Fig. 3 eine Verstärkungsplatte 14′ an der Innenseite eines inneren Rahmenteiles 13′ des Hauptspriegels 4 angeordnet. An der Außenseite des inneren Rahmenteiles 13′ liegt das Versteifungselement 8 an.

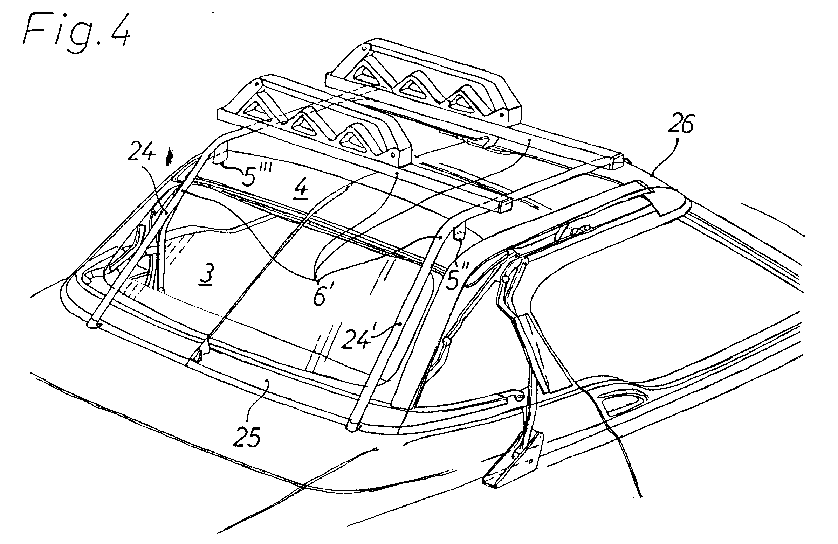

Ein zweites Ausführungsbeispiel ist in Fig. 4 mit einem Träger 6′ dargestellt, der seitliche Tragelemente 24, 24′ aufweist, die vom Dachbereich über die Heckscheibe 3 nach unten abgewinkelt und an einem hinteren Spannbügel 25 des Faltverdecks eingehängt sind. Der Träger 6′ ist durch Öffnungen 5˝, 5‴ beispielsweise ähnlich wie in Fig. 2 oder Fig. 3 dargestellt mit einem Hauptspriegel 4 verbunden. Bei diesem Ausführungsbeispiel ist der Träger 6′ im vorderen Bereich nicht an einem vorderen Querspriegel, sondern an einem oberhalb der vorderen Windschutzscheibe angeordneten Windlaufelement 26 über zwei seitlich gegenüberliegende Befestigungsstellen, ähnlich wie in Fig. 2 oder Fig. 3 dargestellt, befestigt.

## Patentansprüche

1. Faltverdeck für Kraftfahrzeuge, mit einem einen Verdeckstoff (15) stützenden Verdeckgestänge (1), das einen einzelnen vorderen (2) und einen einzelnen hinteren Spriegel (4) aufweist, dadurch gekennzeichnet, daß in dem Verdeckstoff (15) Öffnungen (5, 5′, 5˝, 5‴) ausgebildet sind, durch die ein über dem Faltverdeck angeordneter Träger (6, 6′) mit dem vorderen und hinteren Spriegel (Querspriegel 2, Hauptspriegel 4) verbindbar ist.

2. Faltverdeck nach Anspruch 1, dadurch gekennzeichnet, daß der Träger (6, 6′) über Befestigungselemente (9, 9′) mit dem vorderen und/oder hinteren Spriegel (Querspriegel 2, Hauptspriegel 4) verbindbar ist.

3. Faltverdeck nach Anspruch 2, dadurch gekennzeichnet, daß der Verdeckstoff (15) über die Befestigungselemente (9, 9′) mit dem Spriegel (Querspriegel 2, Hauptspriegel 4) verbunden ist.

4. Faltverdeck nach Anspruch 2 oder 3, dadurch gekennzeichnet, daß das Befestigungselement (9, 9′) ein durch die Öffnung (5, 5′, 5˝, 5‴) nach außen vorstehendes Stützteil mit einer Auflagefläche (16, 16′) für den Träger (6, 6′) ist.

5. Faltverdeck nach Anspruch 4, dadurch gekennzeichnet, daß an dem Stützteil (Befestigungselement 9, 9′) im nach außen vorstehenden Bereich ein seitlich vorstehender Kragen (17, 17′) ausgebildet ist und zwischen dem Kragen (17, 17′) und einer Außenfläche (18, 18′) des Verdeckstoffes (15) ein Formteil (19, 19′) angeordnet ist.

6. Faltverdeck nach Anspruch 5, dadurch gekennzeichnet, daß das Formteil (19, 19′) an die Auflagefläche (16, 16′) und an die Dachkontur des Faltverdecks angepaßt ist.

7. Faltverdeck nach einem der Ansprüche 4 bis 6, dadurch gekennzeichnet, daß das Formteil (19, 19′) mit dem Verdeckstoff (15) und mit dem Stützteil (Befestigungselement 9, 9′) verbunden ist.

8. Faltverdeck nach einem der Ansprüche 4 bis 7, dadurch gekennzeichnet, daß das Stützteil (Befestigungselement 9, 9′) ein erstes (10, 10′) und ein zweites Befestigungsgewinde ((11, 11′) aufweist und über eine in das erste Befestigungsgewinde (10, 10′) eingeschraubte Befestigungsschraube (12, 12′) mit dem Spriegel (Querspriegel 2, Hauptspriegel 4) verbunden und über das zweite Befestigungsgewinde (11, 11′) mit dem Träger (6, 6′) verbindbar ist.

9. Faltverdeck nach einem der Ansprüche 1 bis 8, dadurch gekennzeichnet, daß der Spriegel ein Längslenker, ein Querspriegel (2, Hauptspriegel 4) oder ein über der vorderen Windschutzscheibe befindliches Windlaufelement (26) ist.

## Claims

1. A folding top for motor vehicles, comprising a canopy linkage (1) supporting canopy material (15) and comprising a single front roof arch (2) and a single rear roof arch (4), characterised in that the canopy material (15) is formed with openings (5, 5', 5'', 5''') through which a roof-rack or other carrier (6, 6') disposed above the folding top is connectable to the front and rear roof arches (transverse arch 2, main arch 4).

2. A folding top according to claim 1, characterised in that the carrier (6, 6') is connectable by securing elements (9, 9') to the front and/or rear roof arch (transverse arch 2, main arch 4).

3. A folding top according to claim 2, characterised in that the canopy material (15) is connected by securing elements (9, 9') to the roof arch (transverse arch 2, main arch 4).

4. A folding top according to claim 2 or 3, characterised in that each securing element (9, 9') is a supporting part projecting outwards through a respective opening (5, 5', 5'', 5''') and having a surface (16, 16') for supporting the carrier (6, 6').

5. A folding top according to claim 4, characterised in that a laterally-projecting collar (17, 17') is formed in the outwardly-projecting region of the supporting part (securing element 9, 9') and a moulded part (19, 19') is disposed between the collar (17, 17') and an outer surface (18, 18') of the canopy material (15).

6. A folding top according to claim 5, characterised in that the moulded part (19, 19') is adapted to the supporting surface (16, 16') and to the roof contour of the folding top.

7. A folding top according to any one of claims 4 to 6, characterised in that the moulded part (19, 19') is connected to the canopy material (15) and to the supporting part (securing element 9, 9').

8. A folding top according to any one of claims 4 to 7, characterised in that the supporting part (securing element 9, 9') has a first (10, 10') and a second (11, 11') securing thread and is connected to the roof arch (transverse arch 2, main arch 4) by a screw or bolt (12, 12') which is screwed into the first thread (10, 10') and is connectable to the carrier (6, 6') via the second thread (11, 11').

9. A folding top according to any one of claims 1 to 8, characterised in that the roof arch is a longitudinal arm, a transverse arch (2, main arch 4) or a wind-flow element (26) disposed above the front windscreen.

## Revendications

1. Capote pliante pour véhicules automobiles, avec une tringlerie de capote (1) soutenant un tissu de capote (15), et qui comporte un unique arceau antérieur (2) et un unique arceau postérieur (4), capote pliante caractérisée en ce que dans le tissu (15) de la capote sont ménagées des ouvertures (5, 5', 5'', 5''') à travers lesquelles un support (6, 6') disposé au-dessus de la capote pliante est susceptible d'être relié à l'arceau antérieur et à l'arceau postérieur (arceau transversal 2, arceau principal 4).

2. Capote pliante selon la revendication 1, caractérisée en ce que le support (6, 6') est susceptible d'être relié par l'intermédiaire d'éléments de fixation (9, 9') à l'arceau antérieur et/ou à l'arceau postérieur (arceau transversal 2, arceau principal 4).

3. Capote pliante selon la revendication 2, caractérisée en ce que le tissu (15) de la capote est relié par l'intermédiaire des éléments de fixation (9, 9') à l'arceau (arceau transversal 2, arceau principal 4).

4. Capote pliante selon la revendication 2 ou la revendication 3, caractérisée en ce que l'élément de fixation (9, 9') est une pièce de soutien faisant saillie vers l'extérieur à travers l'ouverture (5, 5', 5'', 5''') avec une surface d'appui (16, 16') pour le support (6, 6').

5. Capote pliante selon la revendication 4, caractérisée en ce que sur la pièce de soutien (élément de fixation 9, 9') sur la zone faisant saillie vers l'extérieur est formée une collerette (17, 17') faisant saillie latéralement, et entre cette collerette (17, 17') et une surface externe (18, 18') du tissu (15) de la capote, est disposée une pièce de forme (19, 19').

6. Capote pliante selon la revendication 5, caractérisée en ce que la pièce de forme (19, 19') est adaptée à la surface d'appui (16, 16') et au contour du toit de la capote pliante.

7. Capote pliante selon l'une des revendications 4 à 6, caractérisée en ce que la pièce de forme (19, 19') est reliée au tissu (15) de la capote et à la pièce de soutien (élément de fixation 9, 9').

8. Capote pliante selon l'une des revendications 4 à 7, caractérisée en ce que la pièce de soutien (élément de fixation 9, 9') comporte un premier filetage de fixation (10, 10') et un second filetage de fixation (11, 11'), et est susceptible d'être reliée par l'intermédiaire d'une vis de fixation (12, 12') vissée dans le premier filetage de fixation (10, 10') avec l'arceau (arceau transversal 2, arceau principal 4) et par l'intermédiaire du second filetage de fixation (11, 11') avec le support (6, 6').

9. Capote pliante selon l'une des revendications 1 à 8, caractérisée en ce que l'arceau est un bras oscillant longitudinal, un arceau transversal (2), un arceau transversal principal (4) ou bien une arcade d'auvent (26) se trouvant au-dessus du pare-brise avant.
